**Europäisches Patentamt**

**European Patent Office**

**Office européen des brevets**

(19)

(11) **EP 1 312 941 A1**

(12) **EUROPEAN PATENT APPLICATION**

(43) Date of publication:
**21.05.2003 Bulletin 2003/21**

(51) Int Cl.7: **G02B 3/00**, G02B 9/02,
**G02B 11/00**

(21) Application number: **02257744.9**

(22) Date of filing: **07.11.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **16.11.2001 JP 2001351754**

(71) Applicant: **ENPLAS CORPORATION
Kawaguchi-shi, Saitama-ken 332-0034 (JP)**

(72) Inventor: **Saito, Tomohiro,
c/o Enplas Corporation
Kawaguchi-shi, Saitama 332-0034 (JP)**

(74) Representative: **Pacitti, Paolo et al
Murgitroyd and Company
165-169 Scotland Street
Glasgow G5 8PL (GB)**

(54) **Image pickup lens**

(57)    An image pickup lens includes a lens body 1 which meets the following conditions:

(1) $|r_1| > |r_2|$

(2) $|r_1| > 1.5 \times f1$

wherein $r_1$ is a radius of curvature of a central portion of a first face of the lens body; $r_2$ is a radius of curvature of a central portion of a second face of the lens body; and f1 is a focal length of the entire lens system. Thus, even when the thickness of a central portion of the lens is varied, the variation in back focal length can be suppressed to the minimum, and the image pickup lens is suitable for a non-adjusted optical system.

FIG. 1

**Description**

## BACKGROUND OF THE INVENTION

### FIELD OF THE INVENTION

The present invention relates to an image pickup lens, and particularly, an image pickup lens of a single lens construction, which is used in an image pickup device (e.g., a CCD camera) utilizing an image pickup element such as CCD, CMOS and the like mounted in a portable computer, a visual telephone, a mobile telephone or the like, and which is suitable for a non-adjusted optical system.

### DESCRIPTION OF THE RELATED ART

In recent years, the multimedia have been developed remarkably, and for example, the demand for a camera utilizing an image pickup element such as CCD, CMOS and the like adapted to be mounted in a portable computer, a visual telephone, a mobile telephone and the like, e.g., a CCD camera, is being increased remarkably.
A so-called single-lens construction using a single lens is conventionally used as such an image pickup lens, because it is advantageous for reductions in size and cost.

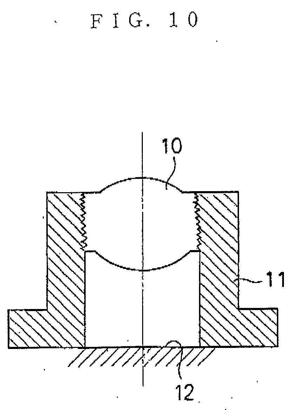

Fig.10 shows such a conventional image pickup lens unit of a single-lens construction. A lens body 10 is adapted to be supported by a cylindrical mount 11 at a predetermined distance from an image pickup surface 12 which is a light-receiving surface of an image pickup element such as CCD or CMOS. In the conventional lens unit, the back focal length (focusing position) of the lens body 1 with respect to the image pickup surface can be adjusted by threadedly inserting and removing the lens body 10 into and from the mount 11.
In recent years, however, a so-called non-adjusted optical system assembled without adjustment of a focus by mounting the lens body 10 directly in the mount 11 has been required in order to simplify the assembling steps and to further reduce the cost for such image pickup lens.
In such a non-adjusted optical system, a variability in back focal length of the lens body must be eliminated, because no adjusting mechanism exists. In usual, the back focal length of the lens body is varied with a variation in thickness of a central portion of the lens. Therefore, in order to ensure that even if the thickness of a central portion of the lens is varied, the back focal length is not varied, for example, it is considered that a planoconvex lens is used as the lens body 10.
When the planoconvex lens is used as the lens body 10, however, the following large problem is encountered: The correction of various aberrations cannot be conducted sufficiently, and the optical characteristics cannot be enhanced. In the designing of the lens body used in such non-adjusted optical system, it is effective for its characteristics to conduct the fine adjustment of the focal length by changing the thickness of the central portion of the lens body. In the case of the planoconvex lens, however, the following problem is encountered: Even if the thickness of the central portion of the lens body is changed, the focal length is not changed and hence, such an adjusting technique is not used. When a lens of a type different from the planoconvex lens is employed, the following problem is encountered: If the thickness of a central portion of a lens body 10 is changed, the back focal length is also changed with such change in thickness and hence, such conventional lens cannot be employed in the non-adjusted optical system.

## SUMMARY OF THE INVENTION

Accordingly, it is an object of the present invention to provide an image pickup lens suitable for a non-adjusted optical system, wherein even when the thickness of the central portion of the lens body is varied, a variation in back focal length can be suppressed to the minimum.
To achieve the above object, according to a first aspect and feature of the present invention, there is provided an image pickup lens utilized in a non-adjusted optical system and mounted without adjustment of a focusing position of a lens body, wherein the lens body meeting the following conditions:

$$(1) \qquad |r_1| > |r_2|$$

$$(2)\ |r_1| > 1.5 \times f1$$

wherein $r_1$ is a radius of curvature of a central portion of a first face of the lens body; $r_2$ is a radius of curvature of a central portion of a second face of the lens body; and f1 is a focal length of the entire lens system.

With the first feature of the present invention, the meeting of the expression (1) ensures that the focal length can be adjusted by adjusting the thickness of the central portion of the lens with the amount of variation in back focal length remaining suppressed to the minimum within an acceptable range (within a depth of focus). In addition, the amount of variation in back focal length due to the variation in thickness of the central portion of the lens can be suppressed to the acceptable range (within the depth of focus) by meeting the expression (2).

Therefore, in the designing of the lens body, the focal length can be adjusted sensitively by changing the thickness of the central portion of the lens body. In addition, the back focal length is little varied with the variation in focal length and hence, the designing efficiency is enhanced, and the image pickup lens is extremely suitable for the non-adjusted optical system. Further, even if the thickness of the central portion of the individual lens body is varied slightly due to the variability in the manufacture of the lens, the back focal length can be maintained consistent, because the back focal length is little varied, even if the thickness of the central portion of the lens body is varied. Therefore, the yield of the lens body can be increased, leading to an enhancement in productivity of the lens body.

According to a second aspect and feature of the present invention, in addition to the first feature, the lens body meets the following condition:

$$(3)\ 0 > r_1$$

wherein $r_1$ is a radius of curvature of the first face of the lens body.

With the second feature, the image pickup lens can be utilized to an optical system suitable as a non-adjusted optical system by forming the image pickup lens as a meniscus lens having a lens body meeting the expression (3).

According to a third aspect and feature of the present invention, in addition to the first or second feature, the lens body meets the following conditions:

$$(4)\ |r_1| > 3 \times |r_2|$$

$$(5)\ |r_1| > 3 \times f1$$

wherein $r_1$ is a radius of curvature of the central portion of the first face of the lens body; $r_2$ is a radius of curvature of the central portion of the second face of the lens body; and f1 is a focal length of the entire lens system.

With the third feature, the meeting of the expression (4) ensures that the focal length can be adjusted by adjusting the thickness of the central portion of the lens with the amount of variation in back focal length remaining suppressed to the minimum within the acceptable range (within the depth of focus) and thus, the image pickup lens is further suitable for the non-adjusted optical system. In addition, the meeting of the expression (5) ensures that the amount of variation in back focal length due to the variation in thickness of the central portion of the lens can be suppressed within the acceptable range (within the depth of focus).

The above and other objects, features and advantages of the invention will become apparent from the following description of the preferred embodiment taken in conjunction with the accompanying drawings.

BRIEF DESCRIPTION OF THE DRAWINGS

Fig.1 is a schematic illustration of a configuration of an embodiment of an image pickup lens according to the present invention;
Fig.2 is a schematic illustration showing an example in which the image pickup lens according to the present invention is mounted;
Fig.3 is a schematic illustration showing another example in which the image pickup lens according to the present invention is mounted;
Fig.4 is a schematic illustration showing an arrangement of a first example of the image pickup lens according to the present invention;
Fig.5 is graphs showing the spherical aberration, the astigmatism and the distortion of the image pickup lens shown in Fig.4;
Fig.6 is a schematic illustration showing an arrangement of a second example of the image pickup lens according to the present invention;
Fig.7 is graphs showing the spherical aberration, the astigmatism and the distortion of the image pickup lens system shown in Fig.6;

Fig.8 is a schematic illustration showing an arrangement of a third example of the image pickup lens according to the present invention;

Fig.9 is graphs showing the spherical aberration, the astigmatism and the distortion of the image pickup lens system shown in Fig.8; and

Fig.10 is an illustration showing an example in which the conventional image pickup lens is mounted.

## DESCRIPTION OF THE PREFERRED EMBODIMENT

The present invention will now be described by way of an embodiment shown in the accompanying drawings.

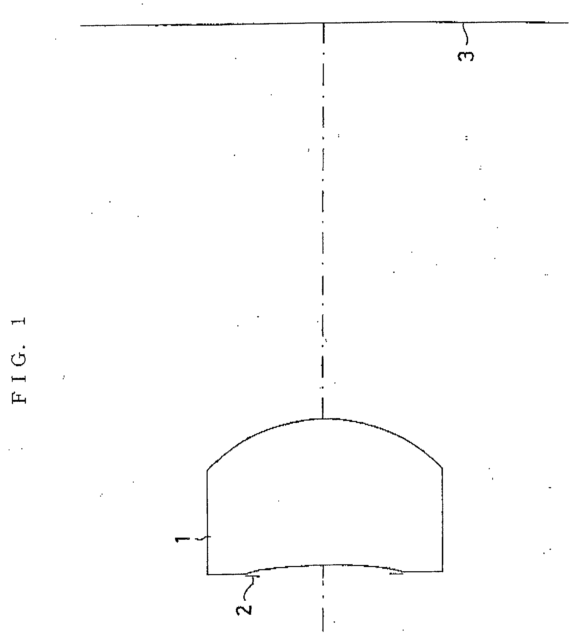

Fig. 1 shows an image pickup lens according to the present invention. This lens includes a lens body 1. A diaphragm 2 is disposed on the side of the lens body 1 adjacent an object, and an image pickup surface 3 which is a light-receiving surface of an image pickup element such as CCD or CMOS is disposed on the side of a second face of the lens body 1.

In the present embodiment, the lens body 1 is adapted to meet the following conditions:

$$(1)\ |r_1| > |r_2|$$

$$(2)\ |r_1| > 1.5 \times f1$$

$$(3)\ 0 > r_1$$

wherein $r_1$ is a radius of curvature of a central portion of the first face; $r_2$ is a radius of curvature of the second face of the lens body 1; and f1 is a focal length of the entire lens system.

In a non-adjusted optical system, it is required that a back focal length (a distance between the second face of the lens body 1 and the image pickup surface 3) is constant. However, in an optical system which does not meet the expression (1), the back focal length is varied in a larger amount due to a variation in thickness of the central portion of the lens and for this reason, this back focal length cannot be utilized to the non-adjusted optical system. The meeting of the expression (1) ensured that the focal length can be adjusted by adjusting the thickness of the central portion of the lens with the amount of variation in back focal length remaining suppressed to the minimum within an acceptable range (within a depth of focus).

In another viewpoint, even if the thickness of the central portion of the lens is varied slightly due to a variability in the manufacture of the lens, the back focal length is little varied and hence, can be used as it is, leading to an increased yield of the lens body. More preferably, the non-adjusted optical system is further suitable by meeting the following expression (4):

$$(4)\ |r_1 > 3 \times |r_2|$$

In addition, the amount of variation in back focal length due to the variation in thickness of the central portion of the lens can be suppressed to the acceptable range (within the depth of focus) by meeting the expression (2). More preferably, the amount of variation in back focal length due to the variation in thickness of the central portion of the lens can be suppressed to the acceptable range (within the depth of focus) by meeting the following expression (5):

$$(5)\ |r_1| > 3 \times f1$$

Further, the image pickup lens can be utilized to an optical system suitable as the non-adjusted optical system by forming the image pickup lens as a meniscus lens having a lens body meeting the expression (3).

Therefore, in the present embodiment, the meeting of the above-described expressions ensures that the focal length can be adjusted sensitively by changing the thickness of the central portion of the lens body 1. In addition, the back focal length is little varied and hence, the image pickup lens is extremely suitable for the non-adjusted optical system. Even if the thickness of the central portion of the individual lens body is varied slightly due to the variability in the manufacture of the lens, the back focal length can be maintained, because the back focal length is little varied, even if the thickness of the central portion of the lens body 1 is varied. Therefore, the yield of the lens body 1 can be increased, leading to an enhancement in productivity of the lens body 1.

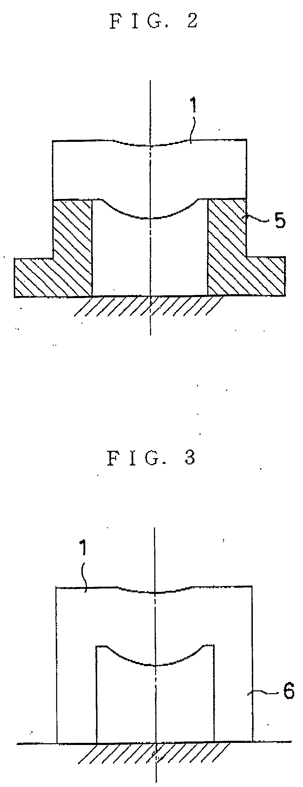

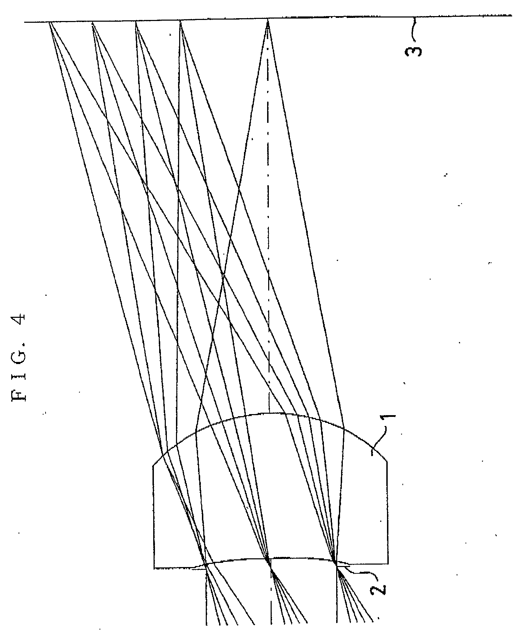

Figs.2 and 3 show states in which such image pickup lens is mounted. As shown in Fig.2, the lens body 1 may be secured to and supported on an upper end of a mount 5, or as shown in Fig.3, a leg 6 for supporting the lens body 1 may be integrally formed on an outer peripheral portion of the lens body 1, so that the lens body 1 may be supported by the leg 6.

EXAMPLES

Examples of the present invention will be described with reference to Figs.4 to 9.

In the examples, f represents a focal length (mm) of the entire system; FNo represents an F number; $2\omega$ represents a maximum angle of view; r represents a radius (mm) of curvature of a central portion of an optical face: d represents a distance (mm) between optical faces on an optical axis; nd represents a refractive index of an optical material (a medium) existing between one optical face and a next optical face; and vd represents an Abbe constant.

If a Z axis is taken in a direction of an optical axis; an X axis is taken in a direction perpendicular to the optical axis, and a direction of travel of light is defined to be positive, the aspherical shape of the lens is represented by the following equation:

$$Z = \frac{\dfrac{x^2}{r}}{1 + \sqrt{1-(k+1)\dfrac{x^2}{r^2}}} + a_4 x^4 + a_6 x^6$$

wherein each of k, $a_4$ and $b_6$ is an aspherical factor.

Example 1

Fig. 4 shows a first example of the present invention. This example is an image pickup lens having a configuration similar to that shown in Fig.1. The image pickup lens in this example is set under the following conditions: f = 3.8 mm; and FNo = 2.8

| Face | Radius r of curvature | Distance d | Retractive index nd | Abbe constant vd |
|---|---|---|---|---|
| (1) Diaphragm | 0.000 | 0.1000 | | |
| (2) First face of lens body | -6.829 | 1.5000 | 1.52 | 56.0 |
| (3) Second face of lens body | -1.649 | 0.0000 | | |
| (4) Image pickup surface | 0.000 | | | |

| Aspherical factors | | | |
|---|---|---|---|
| | K | $a_4$ | $a_6$ |
| 2 | 6.375771e+01 | -3.375666e-02 | 1.096586e-02 |
| 3 | 1.330118e-01 | 9.5933531e-03 | -2.553620e-03 |

Under such conditions, $|r_1| = 6.829$ and $|r_2| = 1.649$ and hence, the expression (1) is met. 3 x $|r_2| = 4.947$ and hence, the expression (4) is met.

In addition, 1.5 x F1 = 5.7 and hence, the expression (2) is met.

Further, the expression (3) is met.

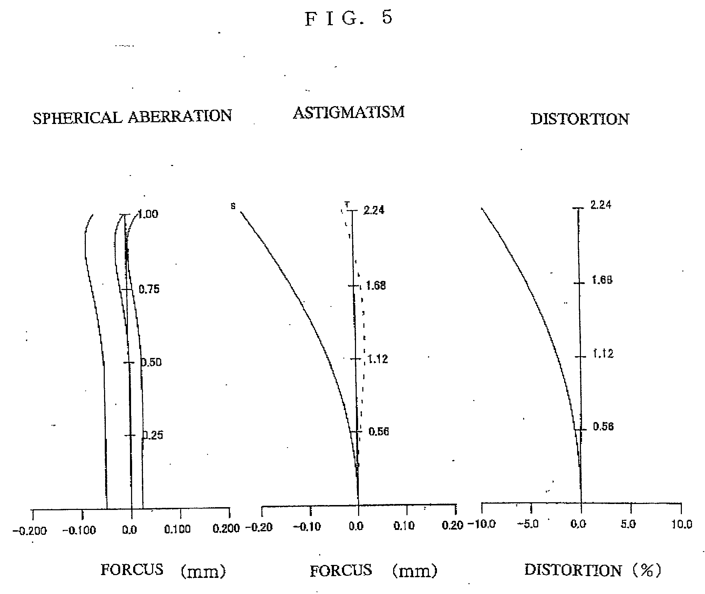

The spherical aberration, the astigmatism and the distortion in the image pickup lens of the example 1 under such conditions are shown in Fig.5.

Example 2

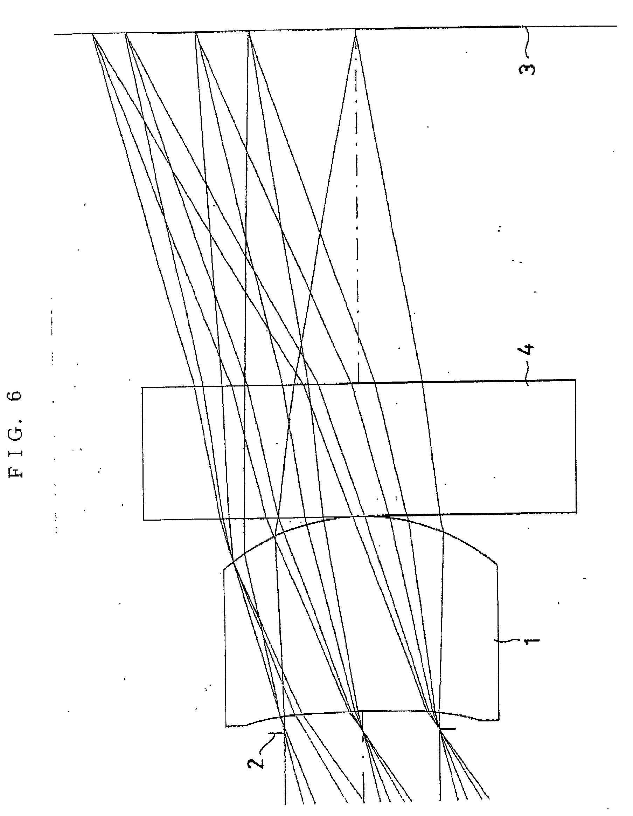

Fig.6 shows a second example of the present invention. In this example, a cover glass 4 is disposed on the second face of the lens body 1 of the image pickup lens.

The image pickup lens in the second example is set under the following conditions: f = 2.22 mm, and FNo = 2.0

| Face | Radius r of curvature | Distance d | Refractive index nd | Abbe constant vd |
|---|---|---|---|---|
| (1) Diaphragm | 0.000 | 0.1000 | | |
| (2) First face of lens body | -7.785 | 1.0000 | 1.52 | 56.0 |
| (3) Second face of lens body | -1,051 | 0.0000 | | |
| (4) First face of cover glass | 0.000 | 0.7000 | 1.52 | 64.0 |
| (5) Second face of cover glass | 0.000 | 1.8588 | | |
| (6) Image pickup surface | | | | |

| Aspherical factors | | | |
|---|---|---|---|
| Face | K | $a_4$ | $a_6$ |
| 2 | 0.000000e+00 | -1.080629e-01 | -5.078214e-01 |
| 3 | -2.046093e-01 | 7.677059e-03 | -5.632927e-02 |

Under such conditions, $|r_1|$ = 7.785 and $|r_2|$ = 1.051 and hence, the expression (1) is met. 3 x $|r_2|$ = 3.153 and hence, the expression (4) is met.

In addition, 1.5 x F1 = 3.33 and hence, the expression (2) is met. Further, 3 x f1 = 6.66 and hence, the expression (5) is met.

Further, the expression (3) is also met.

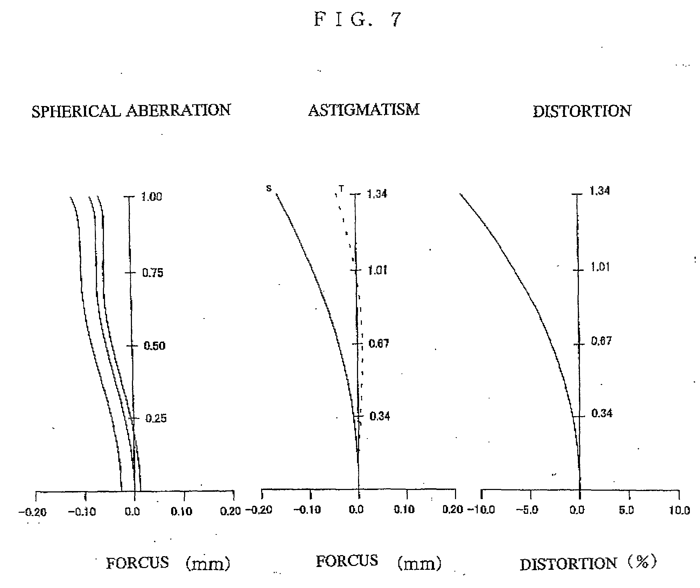

The spherical aberration, the astigmatism and the distortion in the image pickup lens of the second example under such conditions are shown in Fig.7.

Example 3

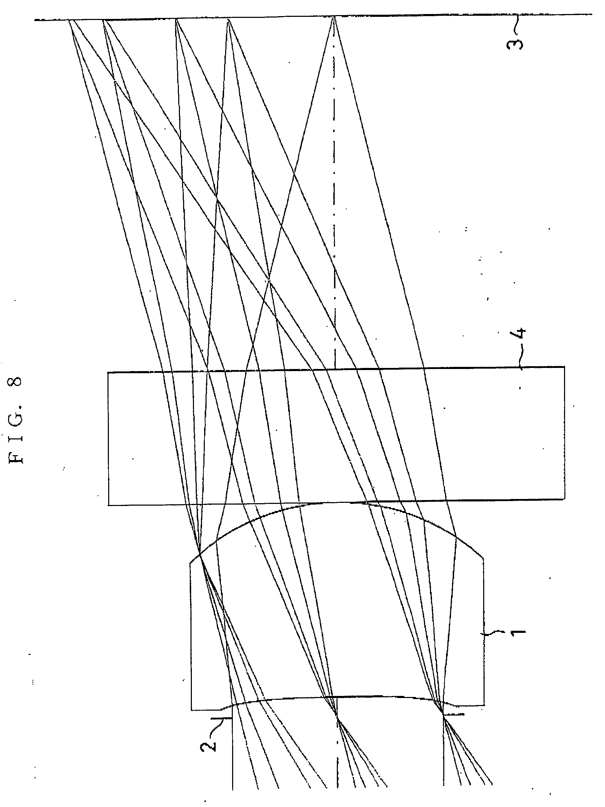

Fig.8 shows a third example of the present invention. In this example, a cover glass 4 is disposed on the second face of the lens body 1 of the image pickup lens shown in Fig.1, as in the second example.

The image pickup lens in the third example is set under the following conditions: f = 2.22 mm, and FNo = 2.8

| Face | Radius ± of curvature | Distance d | Refractive index nd | Abbe constant vd |
|---|---|---|---|---|
| (1) Diaphragm | 0.000 | 0.1000 | | |
| (2) First face of lens body | -7.604 | 0.9000 | 1.52 | 56.0 |
| (3) Second face of lens body | -1.044 | 0.0000 | | |
| (4) First face of cover glass | 0.000 | 0.7000 | 1.52 | 64.0 |
| (5) Second face of cover glass | 0.000 | 1.8512 | | |
| (6) Image pickup surface | 0.000 | | | |

| Aspherical factors | | | |
|---|---|---|---|
| | K | A | b |
| 2 | 1.271349e+00 | -1.325974e-01 | -5.602758-01 |
| 3 | 2.059637e-01 | 5.019090e-02 | -1.498446e-02 |

Under such conditions, $|r_1|$ = 7.604 and $|r_2|$ = 1.044 and hence, the expression (1) is met. 3 x $|r_2|$ = 3.132 and

hence, the expression (4) is met.

In addition, 1.5 x F1 = 3.33 and hence, the expression (2) is met. Further, 3 x f1 = 6.66 and hence, the expression (5) is met.

Further, the expression (3) is also met.

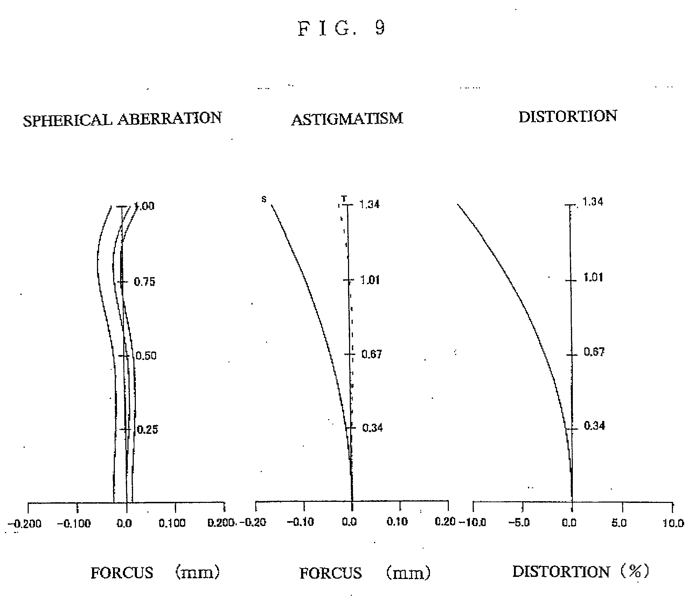

The spherical aberration, the astigmatism and the distortion in the image pickup lens of the third example under such conditions are shown in Fig.9.

Although the embodiment of the present invention has been described in detail, it will be understood that the present invention is not limited to the above-described embodiment, and various modifications may be made as required without departing from the spirit and scope of the invention defined in claims.

**Claims**

1. An image pickup lens utilized in a non-adjusted optical system and mounted without adjustment of a focusing position of a lens body, wherein said lens body meeting the following conditions:

$$(1)\ |r_1| > |r_2|$$

$$(2)\ |r_1| > 1.5 \times f1$$

   wherein $r_1$ is a radius of curvature of a central portion of a first face of the lens body; $r_2$ is a radius of curvature of a central portion of a second face of the lens body; and f1 is a focal length of the entire lens system.

2. An image pickup lens according to claim 1, wherein said lens body meets the following condition:

$$(3)\ 0 > r_1$$

   wherein $r_1$ is a radius of curvature of the first face of the lens body.

3. An image pickup lens according to claim 1 or 2, wherein said lens body meets the following conditions:

$$(4)\ |r_1| > 3 \times |r_2|$$

$$(5)\ |r_1| > 3 \times f1$$

   wherein $r_1$ is a radius of curvature of the central portion of the first face of the lens body; $r_2$ is a radius of curvature of the central portion of the second face of the lens body; and f1 is a focal length of the entire lens system.

EP 1 312 941 A1

F I G. 2

F I G. 3

FIG. 4

# FIG. 5

SPHERICAL ABERRATION     ASTIGMATISM     DISTORTION

FORCUS (mm)     FORCUS (mm)     DISTORTION (%)

FIG. 6

EP 1 312 941 A1

# FIG. 7

SPHERICAL ABERRATION            ASTIGMATISM            DISTORTION

FORCUS (mm)            FORCUS (mm)            DISTORTION (%)

EP 1 312 941 A1

FIG. 8

# F I G. 9

SPHERICAL ABERRATION　　　　ASTIGMATISM　　　　DISTORTION

FORCUS　(mm)　　　　FORCUS　(mm)　　　　DISTORTION (%)

F I G. 10

**European Patent Office**

**EUROPEAN SEARCH REPORT**

Application Number

EP 02 25 7744

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 587 075 A (MATSUSHITA ELECTRONICS CORP) 16 March 1994 (1994-03-16) * page 3, line 24 - page 4, line 12; figures 1,2; tables 1,2,4 * | 1-3 | G02B3/00 G02B9/02 G02B11/00 |
| X | US 4 765 725 A (SUDA SHIGEYUKI) 23 August 1988 (1988-08-23) * column 6, line 55 - column 7, line 12; examples 6,7 * * column 1, line 63 - column 2, line 8 * | 1-3 | |
| X | US 2001/003494 A1 (KITAGAWA TOSHITAKE) 14 June 2001 (2001-06-14) * paragraphs [0025]-[0029]; figures 2,3; table 1 * | 1-3 | |
| X | US 4 695 132 A (SAKUMA NOBUO) 22 September 1987 (1987-09-22) * column 2, line 30-49; examples 3-6 * * column 4, line 21-2 * | 1-3 | |

TECHNICAL FIELDS SEARCHED (Int.Cl.7)

G02B

The present search report has been drawn up for all claims

| Place of search | Date of completion of the search | Examiner |
|---|---|---|
| MUNICH | 18 March 2003 | Casse, M |

**ANNEX TO THE EUROPEAN SEARCH REPORT**
**ON EUROPEAN PATENT APPLICATION NO.**                    EP 02 25 7744

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2003

| Patent document cited in search report | | Publication date | Patent family member(s) | | Publication date |
|---|---|---|---|---|---|
| EP 0587075 | A | 16-03-1994 | JP | 6094991 A | 08-04-1994 |
| | | | DE | 69310060 D1 | 28-05-1997 |
| | | | DE | 69310060 T2 | 07-08-1997 |
| | | | EP | 0587075 A1 | 16-03-1994 |
| | | | US | 5479292 A | 26-12-1995 |
| US 4765725 | A | 23-08-1988 | JP | 61116314 A | 03-06-1986 |
| US 2001003494 | A1 | 14-06-2001 | JP | 2001221904 A | 17-08-2001 |
| US 4695132 | A | 22-09-1987 | JP | 1426607 C | 25-02-1988 |
| | | | JP | 58005706 A | 13-01-1983 |
| | | | JP | 61048684 B | 25-10-1986 |

EPO FORM P0459

For more details about this annex : see Official Journal of the European Patent Office, No. 12/82